(19) **Europäisches Patentamt / European Patent Office / Office européen des brevets**

(11) **EP 3 723 945 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **18816051.9**

(22) Anmeldetag: **10.12.2018**

(51) Internationale Patentklassifikation (IPC):
**B25J 9/16** *(2006.01)*

(52) Gemeinsame Patentklassifikation (CPC):
**B25J 9/1666;** G05B 2219/40476

(86) Internationale Anmeldenummer:
**PCT/EP2018/084215**

(87) Internationale Veröffentlichungsnummer:
**WO 2019/115471 (20.06.2019 Gazette 2019/25)**

(54) **KOLLISIONSFREIE BEWEGUNGSPLANUNG BEI GESCHLOSSENER KINEMATIK**

COLLISION-FREE MOVEMENT PLANNING IN A CLOSED KINEMATIC SYSTEM

PLANIFICATION DE DÉPLACEMENT SANS COLLISION EN PRÉSENCE D'UNE CINÉMATIQUE FERMÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2017 DE 102017129665**

(43) Veröffentlichungstag der Anmeldung:
**21.10.2020 Patentblatt 2020/43**

(73) Patentinhaber: **Pilz GmbH & Co. KG**
**73760 Ostfildern (DE)**

(72) Erfinder:
- **VÖLZ, Andreas**
  **91077 Neukirchen am Brand (DE)**
- **GRAICHEN, Knut**
  **90562 Heroldsberg (DE)**
- **BAKOVIC, Daniel**
  **73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
**CN-A- 105 302 062**

- CHU XIAOYU ET AL: "Path Planning and Collision Avoidance for a Multi-Arm Space Maneuverable Robot", IEEE TRANSACTIONS ON AEROSPACE AND ELECTRONIC SYSTEMS., vol. 54, no. 1, 31 August 2017 (2017-08-31), US, pages 217 - 232, XP055893009, ISSN: 0018-9251, DOI: 10.1109/TAES.2017.2747938
- YOSHIDA E ET AL: "Online replanning for reactive robot motion: Practical aspects", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 5927 - 5933, XP031920155, ISBN: 978-1-4244-6674-0, DOI: 10.1109/IROS.2010.5649645
- WOJCIECH SZYNKIEWICZ ET AL: "Optimization-based approach to path planning for closed chain robot systems", INTERNATIONAL JOURNAL OF APPLIED MATHEMATICS AND COMPUTER SCIENCE, vol. 21, no. 4, 1 December 2011 (2011-12-01), PL, pages 659 - 670, XP055572083, ISSN: 1641-876X, DOI: 10.2478/ v10006-011-0052-8
- CHETTIBI T ET AL: "Generating optimal dynamic motions for closed-chain robotic systems", EUROPEAN JOURNAL OF MECHANICS. A, SOLIDS, GAUTHIER-VILLARS, PARIS, FR, vol. 24, no. 3, 1 May 2005 (2005-05-01), pages 504 - 518, XP027785105, ISSN: 0997-7538, [retrieved on 20050501]

EP 3 723 945 B1

- **KAPERNICK BARTOSZ ET AL: "The gradient based nonlinear model predictive control software GRAMPC", 2014 EUROPEAN CONTROL CONFERENCE (ECC), EUCA, 24 June 2014 (2014-06-24), pages 1170 - 1175, XP032623459, ISBN: 978-3-9524269-1-3, [retrieved on 20140722], DOI: 10.1109/ECC.2014.6862353**

**Beschreibung**

Die vorliegende Erfindung betrifft ein Verfahren zur kollisionsfreien Bewegungsplanung eines ersten Manipulators bei geschlossener Kinematik sowie eine entsprechende Vorrichtung.

Kollisionsfreie Bewegungsplanung ist in der Robotik die Suche nach einem Bewegungspfad für einen Roboter oder seinen Manipulator von einem Startpunkt zu einem Endpunkt, ohne dabei mit sich selbst oder einem Hindernis zu kollidieren. Von einer geschlossenen Kinematik spricht man, wenn mindestens eine geschlossene kinematische Kette vorliegt. Dies ist dann der Fall, wenn ein Manipulator auf zwei verschiedenen Wegen kinematisch mit seiner Basis verbunden ist. Eine geschlossene kinematische Kette bilden beispielsweise ein Roboter und ein am Boden oder der Wand beweglich gelagertes Element oder aber mehrere Manipulatoren eines Roboters, die gemeinsam ein Objekt greifen und bewegen. Die Bewegungsplanung muss dann so erfolgen, dass die geschlossene Kinematik zu jeder Zeit erfüllt ist, d.h. ein Roboter muss sich so bewegen, dass er den Kontakt zu dem festgelagerten Element oder dem gemeinsam zu tragenden Objekt nicht verliert. Für die Bewegungsplanung stellt sich die geschlossene Kinematik somit als eine zusätzliche Beschränkung der Bewegungsfreiheit dar.

Für die verbreiteten Stichproben basierten Bewegungsplaner, wie probabilistic road maps (PRM) oder rapidly-exploring random trees (RRT), ist die geschlossene Kinematik eine große Herausforderung, da die Wahrscheinlichkeit, dass eine zufällige Konfiguration die zusätzliche Beschränkung einhält, gegen null geht. Zwar sind Ansätze bekannt, die aus zufälligen Stichproben durch einen einfachen Gradientenabstieg zulässige Konfigurationen generieren, allerdings gehen die mit hohen Rechenzeiten einher, wenn sehr viele Stichproben zum Lösen des Problems benötigt werden. Darüber hinaus haben probabilistische Verfahren das Problem, dass keine deterministischen Trajektorien erzeugt werden, d.h., dass die Rechenzeit zwar begrenzt werden kann, im Allgemeinen aber nicht vorhersehbar ist.

Neben probabilistischen Verfahren sind optimierungsbasierte Verfahren bekannt, die dazu ausgelegt sind, direkt und ohne Umwege eine gleichmäßige und natürliche Bewegung eines Roboters oder seines Manipulators zu erzeugen. Optimierungsbasierte Verfahren haben zusätzlich den Vorteil, dass sie deterministische Trajektorien liefern können, die reproduzierbar und in endlicher Rechenzeit bestimmbar sind. Voraussetzung für ein optimierungsbasiertes Verfahren ist die Formulierung eines geeigneten Optimierungsproblems, welches die Bewegungsplanung umfänglich erfasst.

SZYNKIEWICZ ET AL, "Optimization-based approach to path planning for closed chain robot systems", INTERNATIONAL JOURNAL OF APPLIED MATHEMATICS AND COMPUTER SCIENCE, PL, (20111201), vol. 21, no. 4, doi:10.2478/v10006-011-0052-8, ISSN 1641-876X, pages 659 - 670, beschreiben einen Ansatz zur Lösung eines Pfadplanungsproblems bei einem Robotersystem mit geschlossener Kinematik. Zur Lösung eines entsprechenden Optimierungsproblems, wird die Trajektorie durch bestimmte Polynome repräsentiert, so dass man ein endlich-dimensionales Optimierungsproblem für die Koeffizienten erhält.

CHETTIBI T ET AL, "Generating optimal dynamic motions for closed-chain robotic systems", EUROPEAN JOURNAL OF MECHANICS. A, SOLIDS, GAUTHIER-VILLARS, PARIS, FR, vol. 24, no. 3, ISSN 0997-7538, (20050501), pages 504 - 518, beschreiben ebenfalls einen Ansatz zur Lösung eines Pfadplanungsproblems, wobei ein allgemeines Optimierungsproblem formuliert wird, welches u.a. eine geschlossene Kinematik berücksichtigt. Zur Lösung des Optimierungsproblems wird eine Volldiskretisierung vorgeschlagen, um das resultierende endlich-dimensionale Problem mit einem SQP-Verfahren zu lösen.

Es ist daher eine Aufgabe der vorliegenden Erfindung, ein Verfahren zur Bewegungsplanung anzugeben, das für eine geschlossene Kinematik unter Vermeidung von Selbstkollisionen und Kollisionen mit Hindernissen eine Berechnung von deterministischen Trajektorien hinsichtlich Reproduzierbarkeit und Rechenzeit ermöglicht sowie eine Anpassung der Trajektorien an veränderte Umgebungen erlaubt.

Gemäß einem Aspekt der vorliegenden Erfindung wird die Aufgabe gelöst durch ein Verfahren nach Anspruch 1.

Ferner wird die Aufgabe durch eine Vorrichtung mit einem ersten Manipulator und einer Steuereinheit gelöst, wobei die Steuereinheit dazu ausgebildet ist, das Verfahren zur kollisionsfreien Bewegungsplanung auszuführen.

Es ist somit eine Idee der vorliegenden Erfindung, die kollisionsfreie Bewegungsplanung bei geschlossener Kinematik als Optimierungsproblem zu formulieren und anschließend numerisch zu lösen. Das Optimierungsproblem ist ein dynamisches Problem, welches die Dynamik des Manipulators hinsichtlich seiner Zustände und Stellgrößen berücksichtigt und über ein Kostenfunktional gewichtet. Die Dynamik bildet den zeitlichen Verlauf der Zustände und Stellgrößen ab. Die Zustände können Positionen im Raum sein, die durch Gelenkwinkel angegeben werden, und die Stellgrößen können Gelenkwinkelgeschwindigkeiten (Integrator) oder Gelenkwinkelbeschleunigungen (Doppelintegrator) sein.

Das Kostenfunktional gewichtet die Zustände und Stellgrößen. Im einfachsten Fall bestraft das Kostenfunktional nur die Stellgrößen mit einer Gewichtungsmatrix, um die Geschwindigkeiten bzw. Beschleunigungen zu minimieren. Diese Formulierung ist äquivalent zur Suche nach dem kürzesten Pfad zwischen einer Startposition des Roboters und der zu erreichenden Zielposition.

Um die geschlossene Kinematik zu berücksichtigen und um Selbstkollisionen oder Kollisionen mit Hindernissen zu vermeiden, wird das dynamische Optimierungsproblem um Gleichungsbeschränkungen und Ungleichungsbeschränkungen ergänzt. Durch die Ungleichungsbeschränkungen können einseitige Grenzen definiert werden, die einzuhalten sind, damit Selbstkollisionen und Kollisionen mit Hindernissen ausgeschlossen werden können. Gleichungsbeschränkungen hingegen sind konkrete Forderungen, die eingehalten werden müssen, sich aber dynamisch mit der Bewegung des Manipulators ändern können. Über die Gleichungsbeschränkungen kann gewährleistet werden, dass während der Bewegung die Bedingungen, die durch die geschlossene Kinematik vorgegeben sind, eingehalten werden.

Das dynamische Optimierungsproblem einschließlich der mindestens einen Ungleichungsbeschränkung und der mindestens einen Gleichungsbeschränkung wird anschließend mit einem numerischen Ansatz gelöst. Vorteilhaft kann bei der numerischen Lösung auf bekannte Verfahren zurückgegriffen werden, da sich die als dynamisches Optimierungsproblem formulierte Bewegungsplanung einschließlich der Gleichungs- und Ungleichungsbeschränkungen nicht von bekannten dynamischen Optimierungsproblemen unterscheidet. Es kann somit auch auf bekannte Maßnahmen zurückgegriffen werden, um das dynamische Optimierungsproblem deterministisch zu gestalten.

Insgesamt ermöglicht die Formulierung des Bewegungsproblems als dynamisches Optimierungsproblem mit Ungleichungsbeschränkungen und Gleichungsbeschränkungen eine vereinfachte Bewegungsplanung, die deterministische Trajektorien hervorbringen kann und eine kollisionsfreie Bewegungsführung des Manipulators unter Einhaltung der Bedingungen für eine geschlossene Kinematik ermöglicht. Die eingangs genannte Aufgabe ist damit vollständig gelöst.

In einer weiteren Ausgestaltung umfasst das dynamische Optimierungsproblem zusätzliche Randbedingungen, welche eine Anfangs- und eine Endbedingung definieren, insbesondere eine Start- und Zielposition des ersten Manipulators.

Über die zusätzlichen Randbedingungen können weitere Vorgaben unmittelbar in die Bewegungsplanung einbezogen werden, so dass beispielsweise ein Manipulator nicht zunächst in eine Initialstellung überführt werden muss, sondern unmittelbar mit der Bewegungsplanung begonnen werden kann.

In einer weiteren Ausgestaltung umfasst das dynamische Optimierungsproblem ferner eine oder mehrere Stellgrößenbeschränkungen, welche die minimalen und maximalen Stellgrößen definieren, insbesondere minimale und maximale Geschwindigkeiten und/oder Beschleunigungen des ersten Manipulators.

Durch die Stellgrößenbeschränkungen kann die Bewegungsplanung unmittelbar auf nur realisierbare Bewegungen des ersten Manipulators eingegrenzt werden. Die Fähigkeiten des Manipulators können somit unmittelbar bei der Lösung des dynamischen Optimierungsproblems berücksichtigt werden.

In einer weiteren Ausgestaltung umfasst das dynamische Optimierungsproblem ferner eine oder mehrere Zustandsbeschränkungen, welche die Grenzen der Zustände definieren, insbesondere minimale und maximale Gelenkwinkel und/oder Gelenkwinkelgeschwindigkeiten des ersten Manipulators.

Durch diese Ausgestaltung können unmittelbar Einschränkungen in einzunehmenden Positionen des Manipulators berücksichtigt werden. Beispielsweise können so Räume definiert werden, die der Manipulator theoretisch erreichen kann, jedoch nicht erreichen soll. Für einen Manipulator kann so beispielsweise ein definierter Arbeitsraum festgelegt werden, der unmittelbar bei der Bewegungsplanung berücksichtigt wird.

Das dynamische Optimierungsproblem weist ferner eine definierte Endzeit auf, welche eine Zeitdauer der Bewegung repräsentiert. Die Zeitdauer der zu planenden Bewegung ist somit ein Teil des Optimierungsproblems und bei der Bewegungsplanung zu berücksichtigen.

In einer weiteren Ausgestaltung definiert die mindestens eine Ungleichungsbeschränkung für einen Abstand zu Kollisionen einen Mindestabstand zu Kollisionen. Die Ungleichungsbeschränkung legt somit fest, wie weit sich der Manipulator einem Hindernis annähern darf bzw. wieviel Abstand er von sich selbst halten muss.

In einer weiteren Ausgestaltung definiert die mindestens eine Gleichungsbeschränkung für die geschlossene Kinematik eine erste dynamische Positionsbeschränkung und/oder eine erste dynamische Orientierungsbeschränkung. Die Gleichungsbeschränkung stellt somit eine dynamische Forderung für die Position bzw. die Orientierung des Manipulators während der Bewegung auf. Durch translatorische und rotatorische Beschränkungen kann während der Bewegung die Bedingung der geschlossenen Kinematik aufrechterhalten werden.

In einer weiteren Ausgestaltung beinhaltet der numerische Ansatz die Überführung des dynamischen Optimierungsproblems von einem beschränkten Optimierungsproblem in ein unbeschränktes Optimierungsproblem. Die Überführung des dynamischen Optimierungsproblems hin zu einem unbeschränkten Optimierungsproblem ermöglicht eine besonders effiziente Lösung des Optimierungsproblems, wobei auf bekannte Verfahren für die Lösung von unbeschränkten Optimierungsproblemen zurückgegriffen werden kann.

In einer hierzu bevorzugten Ausgestaltung wird die mindestens eine Gleichungsbeschränkung für die geschlossene Kinematik und die mindestens eine Ungleichungsbeschränkung für einen Abstand zu Kollisionen jeweils mit einem Multiplikator multipliziert und zum Kostenfunktional hinzuaddiert. Ferner kann mindestens eine Gleichungsbeschränkung für die geschlossene Kinematik und die mindestens eine Ungleichungsbeschränkung für einen Abstand zur Kollision in quadrierter Form mit einem Strafparameter multipliziert und zum Kostenfunktional hinzuaddiert werden. Die numerische Lösung basiert somit auf der erweiterten Lagrange-Methode. Dabei werden Multiplikatoren und Strafparameter für alle Beschränkungen bestimmt und die Beschränkungen mit den Multiplikatoren und Strafparametern dem Kostenfunktional hinzugefügt. Es entsteht ein Max-Min-Optimierungsproblem ohne Beschränkungen mit einer unterlagerten Minimierung bezüglich der Stellgrößen und einer überlagerten Maximierung bezüglich der Multiplikatoren.

Bevorzugt werden dabei die Multiplikatoren und Strafparameter beim Lösen des dynamischen Optimierungsproblems iterativ angepasst und das unbeschränkte Optimierungsproblem im Übrigen mit einem Gradientenverfahren gelöst.

Das Verfahren beinhaltet das Ausführen der ersten Bewegungsbahn parallel zur Lösung des Optimierungsproblems. Planung und Ausführung finden somit parallel statt, wodurch die notwendige Rechenzeit vor Beginn der Bewegung reduziert werden kann. Ebenso können häufige Neuplanungen vermieden werden, indem die Trajektorie während der Ausführung weiter optimiert wird.

Das dynamische Optimierungsproblem weist eine Endzeit auf, welche die Zeitdauer der Bewegung repräsentiert und der numerische Ansatz generiert in einem ersten Schritt eine erste Teillösung für mindestens einen ersten Zeitschritt, welcher kleiner ist als die Zeitdauer der Bewegung, und der numerische Ansatz generiert in mindestens einem zweiten Schritt eine zweite Teillösung für einen zweiten Zeitschritt, wobei für den zweiten Zeitschritt ein angepasstes Optimierungsproblem verwendet wird, welches dem dynamischen Optimierungsproblem entspricht und einen Zustand am Ende des ersten Zeitschritts als Anfangsbedingung berücksichtigt.

Die Bewegungsplanung erfolgt somit sukzessive. Da die Bewegungsplanung mit geschlossener Kinematik sich deutlich schwieriger gestaltet als im Fall mit offener Kinematik und erheblich mehr Zeit zur Berechnung benötigt, kann durch die sukzessive und parallele Planung und Ausführung die notwendige Rechenzeit vor Beginn der Bewegung reduziert werden. Es ist somit eine Idee, die Trajektorie sukzessive weiter zu optimieren. Die Bewegung kann dabei schon ausgeführt werden, obwohl sie noch nicht vollständig kollisionsfrei ist. Da die weitere Optimierung an die veränderten Umgebungsbedingungen angepasst wird, ergibt sich automatisch ein lokales Ausweichverhalten. Die Optimierung auf bewegtem Horizont ermöglicht somit eine iterative Verbesserung der Lösung und Anpassung der Trajektorie an veränderte Umgebungsbedingungen. Ein Start mit einer suboptimalen Lösung wird dabei möglich, wobei die Lösung während der Ausführung weiter verbessert wird.

In einer weiteren Ausgestaltung umfasst das Verfahren ferner das Bestimmen einer zweiten Bewegungsbahn für einen zweiten Manipulator, wobei das Kostenfunktional zusätzlich die Zustände und Stellgrößen des zweiten Manipulators gewichtet und die Dynamik die Zustände und Stellgrößen des zweiten Manipulators in Abhängigkeit der Zeit definiert, und wobei der erste Manipulator und der zweite Manipulator die geschlossene Kinematik bilden.

In dieser Ausgestaltung werden somit anhand des dynamischen Optimierungsproblems zwei Bewegungsbahnen bestimmt, mit denen zwei Manipulatoren so bewegt werden können, dass die Manipulatoren eine geschlossene kinematische Kette bilden. Mit anderen Worten wird mit einem Optimierungsproblem die Steuerung eines Zweiarmroboters verwirklicht, die miteinander verbunden sind, beispielsweise indem sie gemeinsam einen Gegenstand bewegen. Die Ausgestaltung trägt vorteilhaft zu einer effizienten Implementierung einer Steuerung für einen Zwei- oder Mehrarmroboter bei.

Besonders bevorzugt umfasst die mindestens eine Gleichungsbeschränkung für die geschlossene Kinematik in diesem Fall eine erste dynamische Positions- und/oder Orientierungsbeschränkung des ersten Manipulators und eine zweite dynamische Positions- und/oder Orientierungsbeschränkung des zweiten Manipulators umfasst, die in einem definierten, festen Verhältnis zueinanderstehen, so dass die geschlossene Kinematik erfüllt ist. Die Gleichungsbeschränkung des Optimierungsproblems wird somit durch ein festes Verhältnis hinsichtlich der Position und/oder der Orientierung des ersten und des zweiten Manipulators definiert.

Ausführungsbeispiele der Erfindung sind in der Zeichnung dargestellt und werden in der nachfolgenden Beschreibung näher erläutert. Es zeigen:

Fig. 1    ein Blockdiagramm eines Ausführungsbeispiels des neuen Verfahrens,
Fig. 2    eine formale Repräsentation des Optimierungsproblems,
Fig. 3    eine schematische Darstellung von paralleler Planung und Ausführung, und
Fig. 4    ein bevorzugtes Ausführungsbeispiel der neuen Vorrichtung.

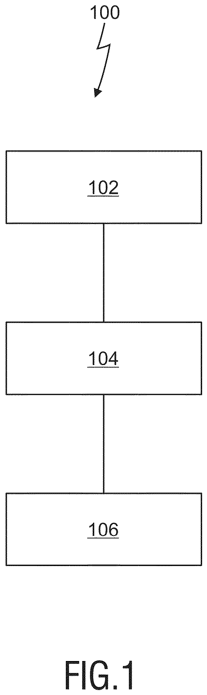

In der Fig. 1 ist ein Ausführungsbeispiel des neuen Verfahrens in seiner Gesamtheit mit der Bezugsziffer 100 bezeichnet.

Das Verfahren beginnt mit der Formulierung eines geeigneten Optimierungsproblems für die Bewegungsplanung im Schritt 102. Die Grundlage des Optimierungsproblems ist ein Systemmodell, welches die Dynamik des sich bewegenden Systems hinsichtlich der möglichen Zustände und Stellgrößen in Abhängigkeit der Zeit beschreibt. Darüber hinaus umfasst das Optimierungsproblem ein Kostenfunktional, welches das Ziel der Optimierung spezifiziert. Das Kostenfunktional enthält eine oder mehrere Zielfunktionen, welche die Parameter des Systemmodells gewichten.

Grundsätzlich ist das Ziel der Optimierung, eine Funktion einer unabhängigen Variablen (in der Regel eine Zeitfunktion) zu suchen, welche das Kostenfunktional minimiert. Mit anderen Worten im Falle der Bewegungsplanung ist es ein Ziel, eine optimale Eingangstrajektorie zu finden, welche zum Ansteuern des Manipulators verwendet werden kann. Man spricht in diesem Zusammenhang auch von einem Optimalsteuerungsproblem.

Das Optimierungsproblem umfasst darüber hinaus Beschränkungen, die eine freie Bewegung im Raum einschränken und bei der Bewegungsplanung zu berücksichtigen sind. Die Beschränkungen umfassen mindestens eine Ungleichungsbeschränkung, welche Hindernisse im Raum berücksichtigt, und mindestens eine Gleichungsbeschränkung, welche kinematische Einschränkungen berücksichtigt.

Das Ergebnis des Schritts 102 ist eine formale Repräsentation des Systems, seiner Grenzen und der gewünschten Optimierung.

Anschließend, im Schritt 104, wird das Optimierungsproblem gelöst, d.h. es wird die Funktion gesucht, welche das Kostenfunktional minimiert. Dies erfolgt über einen numerischen Ansatz, vorzugsweise rechnergestützt. Anstelle einer konkreten Lösung, ermöglicht der numerische Ansatz eine näherungsweise Berechnung des Optimierungsproblems. Es kann somit auch eine Lösung angegeben werden, wenn keine explizierte Lösungsdarstellung möglich ist bzw. diese nicht in einem vertretbaren Zeitansatz gefunden werden kann.

Es ist eine Vielzahl verschiedener numerischer Verfahren und Programme bekannt, mit denen das Optimierungsproblem grundsätzlich gelöst werden kann. Welcher Ansatz am besten geeignet ist, hängt dabei von verschiedenen Faktoren ab, u.a. von der geforderten Genauigkeit oder der verfügbaren Rechenzeit. Die Erfindung ist nicht auf ein spezifisches numerisches Lösungsverfahren beschränkt.

Das Ergebnis aus Schritt 104 ist eine optimale Lösungsfunktion oder eine Approximation dieser optimalen Funktion mit hinreichender Genauigkeit.

Basierend auf der optimalen Lösungsfunktion bzw. deren Näherung wird im Schritt 106 eine konkrete Bewegungsbahn für den ersten Manipulator ermittelt. D.h. anhand der numerischen Lösung wird die konkrete Bewegung des Manipulators formuliert. Im einfachsten Fall ist die Lösung des Optimierungsproblems eine optimale Eingangstrajektorie, welche unmittelbar in eine Bewegungssteuerung eines Manipulators umgesetzt werden kann. Das erfindungsgemäße Verfahren liefert somit vorzugsweise unmittelbar und direkt die gewünschte Ansteuerung, welche prinzipbedingt zu einer gleichmäßigen und natürlichen Bewegung des Manipulators führt.

Da, wie im Folgenden noch näher erläutert wird, das Optimierungsproblem u.a. Hindernisse über die zumindest eine Ungleichungsbeschränkung und die geschlossene Kinematik über die zumindest eine Gleichungsbeschränkung berücksichtigt, erzeugt das Verfahren insgesamt eine gleichmäßige und natürliche Bewegung des Manipulators um die Hindernisse herum und ohne die Forderung an die geschlossene Kinematik zu verletzen. Somit können die verschiedenen Probleme der Bewegungsplanung (Hindernisse, Kinematik) umfassend berücksichtigt werden, wobei die Planung durch den numerischen Ansatz iterativ und insbesondere deterministisch gestaltet werden kann. Die Planungszeiten sind kurz und bestimmbar, wodurch eine echtzeitfähige Implementierung der Bewegungsplanung möglich wird. Die resultierende Bewegung ist natürlich, kollisionsfrei und berücksichtigt die geschlossene Kinematik.

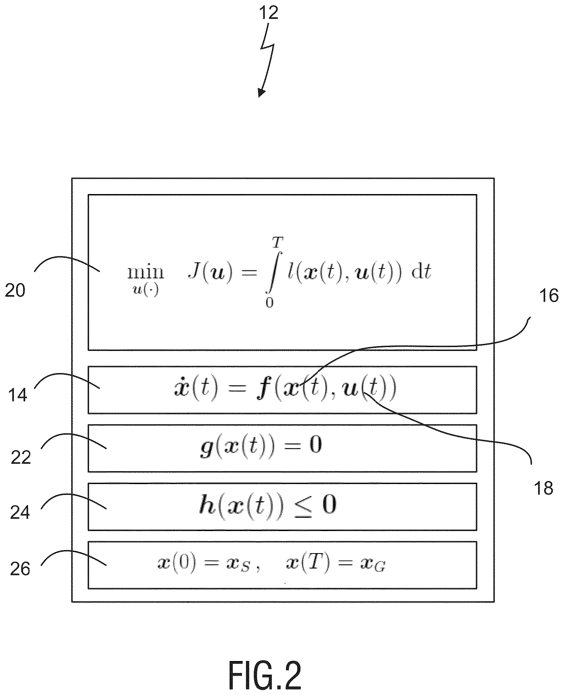

Fig. 2 zeigt eine formale Repräsentation des dynamischen Optimierungsproblems, welches hier in seiner Gesamtheit mit der Bezugsziffer 12 bezeichnet ist. Ausgangspunkt ist das Systemmodell, welches die Dynamik 14 des bewegten Systems, beispielsweise des Manipulators, mit den Zuständen 16 und Stellgrößen 18 beschreibt. Die Dynamik 14 kann vereinfacht als Integrator $\dot{q} = u$ mit den Zuständen $x = q$ und den Stellgrößen $\dot{q}$ oder als Doppelintegrator $\ddot{q} = u$ mit den Zuständen $x [q^T, \dot{q}^T]^T$ und den Stellgrößen $u = \ddot{q}$ angenommen werden.

Soll mit der Optimierung nur ein Pfad berechnet werden ohne Zeitparametrierung, so genügt der einfache Integrator als Systemmodell. Wenn andererseits die berechnete Trajektorie direkt ausgeführt werden soll, sollte der Doppelintegrator verwendet werden, da hier die minimale und maximale Beschleunigung berücksichtigt werden können.

Das Kostenfunktional 20 gewichtet die Zustände 16 und Stellgrößen 18. Aufgabe der Optimierung ist es, aus den in der Regel unendlich vielen Steuerfunktionen die optimale Steuerfunktion herauszufinden, die das Kostenfunktional 20 minimiert.

Über die zumindest eine Gleichungsbeschränkung 22 des Optimierungsproblems 12 wird eine geschlossene Kinematik des Systems bei der Planung berücksichtigt. Eine geschlossene Kinematik ist dann gegeben, wenn mindestens eine geschlossene kinematische Kette vorliegt. Dies ist beispielsweise der Fall, wenn ein Manipulator auf zwei verschiedenen Wegen kinematisch mit seiner Basis verbunden ist.

Eine geschlossene Kinematik ist auch dann gegeben, wenn ein Roboter mehrere Manipulatoren aufweist, die miteinander verbunden sind, beispielsweise indem die Manipulatoren gemeinsam ein Werkstück heben und bewegen. In diesem Fall ist eine Pose der Endeffektoren der jeweiligen Manipulatoren immer relativ zu einer Pose der Endeffektoren der jeweils anderen Manipulatoren. Es besteht somit eine Beschränkung der Posen der einzelnen Manipulatoren zueinander, die sich paarweise als eine Gleichungsbeschränkung darstellt ($P_1(x)P_{relativ}=P_2(x)$) darstellt. Die Gleichungsbeschränkungen definieren somit eine dynamische Sollvorgabe, die bei der Lösung des dynamischen Optimierungsproblems berücksichtigt werden muss. Mit anderen Worten, die Bedingung einer geschlossenen Kinematik fließt als zusätzliche Beschränkung in das zu lösende Optimierungsproblem ein. Damit wird die geschlossene Kinematik unmittelbar bei der Bewegungsplanung berücksichtigt und unmittelbarer Bestandteil der Bewegungsplanung selbst.

Das dynamische Optimierungsproblem 12 umfasst darüber hinaus zumindest eine Ungleichungsbeschränkung 24, über welche Hindernisse im Raum berücksichtigt werden können. Vorzugsweise fordert die mindestens eine Ungleichungsbeschränkung einen Mindestabstand zu Kollisionen mit Hindernissen im Raum. Die Berechnung dieser Kollisionsdistanz und ihrer partiellen Ableitungen nach den Zuständen stellt den aufwendigsten Teil des Optimierungsproblems dar.

Mit den Ungleichungsbeschränkungen 24 werden vorzugsweise der Abstand zu Selbstkollisionen und der Abstand zu Kollisionen mit Hindernissen berücksichtigt. Zur Berechnung des Abstands für Selbstkollisionen kann in einem Ausführungsbeispiel eine Approximation des Roboters durch Kugeln mit Mittelpunkt und Radius herangezogen werden. Für die Kollision mit Hindernissen kann eine Approximation der Umgebung durch eine Rasterkarte erfolgen, wobei sich die zu berücksichtigende Distanz durch die Euklid'sche Distanztransformation der Rasterkarte ergibt. Berücksichtigt wird der jeweils kleinste Abstand entweder zur Selbstkollision oder zur Kollision mit einem Hindernis.

Es versteht sich, dass neben den genannten Beschränkungen weitere Randbedingungen 26 und Beschränkungen von dem dynamischen Optimierungsproblem 12 umfasst sein können. Insbesondere können weitere Ungleichungsbeschränkungen 24 vorgesehen sein, die Ober- und Untergrenzen von möglichen Zuständen definieren. Beispielsweise können Grenzen für minimale und maximale Gelenkwinkel festgelegt und vom Optimierungsproblem erfasst werden. Ferner sind Stellgrößenbeschränkungen denkbar, welche die minimalen und maximalen Stellgrößen definieren, insbesondere minimale und maximale Geschwindigkeiten und/oder Beschleunigungen des ersten Manipulators.

Die Zeitdauer der Bewegung wird über eine definierte Endzeit T berücksichtigt. Die Endzeit T ist als eine weitere Größe ein Bestandteil der Optimierung. Die Zeit im Kostenfunktional 20 wird gewichtet, wobei bevorzugt Minimal- und Maximalwerte festgelegt werden. Durch die Berücksichtigung der Endzeit T kann ein deterministisches Verhalten der Optimierung erreicht werden.

Die Lösung des hier dargestellten Optimierungsproblems 12 kann auf verschiedene Weise über verschiedene numerische Ansätze erfolgen. In einem bevorzugten Ausführungsbeispiel erfolgt die numerische Lösung des Optimierungsproblems 12 mit einem Gradientenverfahren und der erweiterten Lagrange-Methode. Kern des numerischen Ansatzes ist hier das Überführen des dynamischen Optimierungsproblems mit Beschränkungen in ein unbeschränktes Optimierungsproblem. Mit anderen Worten wird das Optimierungsproblem auf die Optimierung einer Hilfsfunktion ohne Nebenbedingungen reduziert. Bei der Überführung werden die Beschränkungen mit reellen Faktoren, den sogenannten Lagrange-Multiplikatoren, multipliziert und in die Zielfunktion eingebaut. Mit positiven Lagrange-Multiplikatoren wird eine Verletzung der Beschränkungen bestraft.

Die erweiterte Lagrange-Methode umfasst zusätzlich eine quadratische Straffunktion, die über einen weiteren Multiplikator in die Zielfunktion eingebaut wird.

Die resultierende Hilfsfunktion, die auch als erweiterte Lagrange-Funktion bezeichnet wird, lautet:

$$L(x, \mu, \rho) = f(x) + \mu g(x) + \frac{1}{2}\rho g(x)^2$$

mit dem Lagrange-Multiplikator $\mu$ und dem Strafparameter p. Dabei entspricht der vordere Anteil $f(x)+\mu g(x)$ der gewöhnlichen Lagrange-Funktion und der hintere Teil $\frac{1}{2}\rho g\left(x\right)^2$ einer quadratischen Straffunktion. Unter Annahme von starker Dualität und der Existenz einer optimalen Lösung $x^*$, $\mu^*$ kann gezeigt werden, dass für jedes p $\geq$ 0 die Sattelpunktbedingung

$$L(x^*, \mu, \rho) \leq L(x^*, \mu^*, \rho) \leq L(x, \mu^*, \rho)$$

erfüllt sein muss. Daraus ist ersichtlich, dass die Lagrange-Funktion bezüglich der Variablen x minimiert und bezüglich der Lagrange-Multiplikatoren $\mu$ maximiert werden muss, d.h. ein neues Optimierungsproblem

$$\max_{\mu} \min_{x} L(x, \mu, \rho)$$

gelöst werden muss.

Dabei wird über eine Iteration k zunächst das unterlagerte Minimierungsproblem

$$x^{(k+1)} = \arg\min_{x} L\left(x, \mu^{(k)}, \rho^{(k)}\right).$$

formuliert, welches durch ein Gradientenverfahren gelöst wird. Anschließend werden die Lagrange-Multiplikatoren per steilstem Aufstieg

$$\mu^{(k)} = \mu^{(k)} + \rho^{(k)} g\left(x^{(k)}\right)$$

mit dem Strafparameter p(k) als Schrittweite aktualisiert. Die Konvergenz des Verfahrens kann durch eine Adaption des Strafparameters erheblich verbessert werden. Dabei hat sich die Heuristik

$$\rho^{(k+1)} = \begin{cases} \beta_{\mathrm{inc}}\,\rho^{(k)} & \left|g\left(x^{(k)}\right)\right| \geq \gamma_{\mathrm{inc}}\left|g\left(x^{(k-1)}\right)\right| \wedge \left|g\left(x^{(k)}\right)\right| > \varepsilon_g \\ \beta_{\mathrm{dec}}\,\rho^{(k)} & \left|g\left(x^{(k)}\right)\right| \leq \gamma_{\mathrm{dec}}\,\varepsilon_g \\ \rho^{(k)} & \mathrm{sonst} \end{cases}$$

mit den Faktoren $\beta_{inc} > 1$, $\beta_{dec} < 1$, $\gamma_{inc}$ und $\gamma_{dec} < 1$ $\beta_{inc} > 1$, $\beta_{dec} < 1$, und der absoluten Toleranz $\varepsilon_g$ in der praktischen Anwendung bewährt.

Falls durch die Minimierung keine ausreichende Verbesserung der Beschränkung erzielt wurde, wird der Strafparameter weiter erhöht. Sobald die Beschränkung mit der geforderten Toleranz eingehalten wird, kann der Strafparameter wieder reduziert werden. Das Vorgehen wird wiederholt bis eine maximale Iterationszahl $k = N_{mult}$ erreicht ist oder die

Die Ungleichungsbeschränkungen $h(x) \leq 0$ können durch Einführung von Schlupfvariablen $z \geq 0$ in Gleichungsbeschränkungen $g(x) = h(x) + z = 0$ überführt werden. Die Minimierung bezüglich $z$ kann explizit ausgerechnet werden und ergibt $z^* = \max\left\{0, -\frac{\mu}{\rho} - h(x)\right\}$. Daraus folgt eingesetzt in g(x) die äquivalente Formulierung

$$g_+(x, \mu, \rho) = \max\left\{h(x), -\frac{\mu}{\rho}\right\}$$

**ohne Schlupfvariablen,** die in der Lagrange-Funktion verwendet werden kann. Die Adaptionsregel für den Strafparameter wird für Ungleichungsbeschränkungen ohne den Absolutbetrag gebildet.

Bei mehreren Gleichungs- und Ungleichungsbeschränkungen ergibt sich jeweils ein Lagrange-Multiplikator pro Beschränkung. Der Strafparameter kann entweder einheitlich für alle oder wie der Lagrange-Multiplikator separat für jede Beschränkung gewählt werden. Um die Robustheit des Verfahrens zu verbessern, kann die Aktualisierung der Multiplikatoren, wenn in der Minimierung keine ausreichende Konvergenz erreicht wurde, übersprungen werden. Außerdem sind die Lagrange-Multiplikatoren und die Strafparameter durch Minimal- und Maximalwerte begrenzt.

Im Einzelnen führt das Gradientenverfahren ausgehend von einer initialen Stellgröße $u^{(0)}(t)$ in jeder Iteration $j$ die folgenden Schritte aus:

- Integrieren des Systems ausgehend von der Anfangsbedingung in Vorwärtszeit, um $x^{(j)}(t)$ zu erhalten.

- Integrieren des adjungierten Systems ausgehend von der Endbedingung in Rückwärtszeit, um $\lambda^{(j)}(t)$ zu erhalten.

- Lösen des unterlagerten Liniensuchproblems

$$\alpha^{(j)} = \arg\min_{\alpha > 0} J\left(\psi\left(\boldsymbol{u}^{(j)} - \alpha \boldsymbol{g}^{(j)}\right)\right)$$

mit der Suchrichtung:

$$\boldsymbol{g} = \frac{\partial H(\boldsymbol{x}, \boldsymbol{u}, \boldsymbol{\lambda})}{\partial \boldsymbol{u}} = \left(\frac{\partial l(\boldsymbol{x}, \boldsymbol{u})}{\partial \boldsymbol{x}}\right)^{\mathrm{T}} + \left(\frac{\partial \boldsymbol{f}(\boldsymbol{x}, \boldsymbol{u})}{\boldsymbol{x}}\right)^{\mathrm{T}} \boldsymbol{\lambda}$$

**Dabei werden** die Stellgrößenbeschränkungen durch die Projektion $\Psi$ auf die zulässige Menge *[u-, u+]* berücksichtigt.

- Berechnen der neuen Stellgröße $u^{(j+1)} = \psi(u^{(j)} - \alpha^{(j)} g^{(j)})$ und setzen von $j = j + 1$.

- Abbrechen des Gradientenverfahrens bei $j = N_{grad}$ oder bei Erreichen eines Konvergenzkriteriums.

Das hier dargestellte Gradientenverfahren lässt sich verhältnismäßig einfach implementieren. Die einzelnen Iterationen benötigen nur wenig Rechenzeit. Der Speicherbedarf des Verfahrens ist gering. Insbesondere am Anfang des Verfahrens tritt meist eine deutliche Reduktion der Kostenfunktion auf, so dass schnell eine suboptimale Lösung gefunden wird. Um eine hohe Genauigkeit zu erreichen, werden im Vergleich mit Methoden, die Information zweiter Ordnung (Hesse-Matrix) nutzen, jedoch viele Iterationen benötigt.

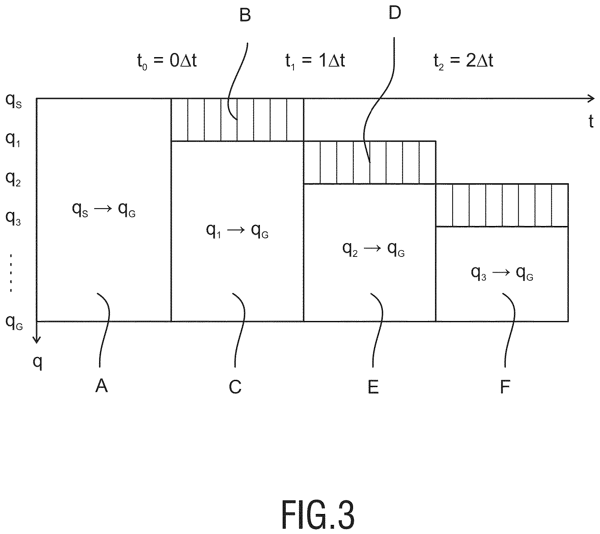

In einem bevorzugten Ausführungsbeispiel erfolgt die vorstehend aufgezeigte Planung parallel zur tatsächlichen Ausführung, d.h. parallel zur tatsächlichen Bewegung des Manipulators. Das Prinzip von paralleler Planung und Ausführung ist in der Fig. 3 veranschaulicht.

Durch parallele Planung und Ausführung kann sowohl die notwendige Rechenzeit vor Beginn der Bewegung reduziert werden, als auch die Notwendigkeit von häufigen Neuplanungen vermieden werden. Dabei wird die Trajektorie während der Ausführung weiter optimiert. Somit kann die Trajektorie bereits ausgeführt werden, auch wenn sie noch nicht vollständig kollisionsfrei ist. Darüber hinaus wird auf diese Weise die Trajektorie vorteilhaft durch die weitere Optimierung an veränderte Umgebungsbedingungen angepasst, so dass sich automatisch ein lokales Ausweichverhalten ergibt.

Im ersten Zeitschritt wird die Bewegung von $q_S$ nach $q_G$ geplant (A). Im zweiten Zeitschritt wird der Anfang dieser Trajektorie bis zu $q_1 = q(\Delta T)$ ausgeführt (B) und zeitgleich die Bewegung von $q_1$ nach $q_G$ weiter optimiert (C). Wenn der Roboter die Position $q_1$ erreicht hat, wird direkt das nächste Stück der Trajektorie bis zu $q_2 = q(2\Delta T)$ ausgeführt (D) und die Optimierung ab diesem Punkt fortgesetzt (E). Diese Methode wird so lange wiederholt bis innerhalb von einem Zeitschritt der Zielpunkt $q_G$ erreicht wird (F), so dass keine weitere Optimierung nötig ist.

Die praktische Umsetzung erfordert somit ein enges Zusammenspiel von Planungs- und Ausführungsebene. Jeder Planungsschritt (A, C, D, F) muss seine Berechnung innerhalb der Abtastzeit $\Delta t$ beenden. Im Zeitschritt $t_k = k\Delta t$ muss die berechnete Trajektorie von $\boldsymbol{q}_k$ nach $q_G$ zumindest für die nächste Abtastzeit zulässig sein, d.h. $\boldsymbol{q}_k \to \boldsymbol{q}_{k+1}$ muss kollisionsfrei sein und die geschlossene Kinematik einhalten. Die Ausführung (B, D) startet jedoch erst, wenn die letzte Bewegung $q_{k-1} \to \boldsymbol{q}_k$ abgeschlossen ist, so dass sich der Roboter zum Zeitpunkt des Wechsels genau an der Position $\boldsymbol{q}_k$ befindet. Probleme können sich z.B. ergeben, wenn am Übergangspunkt Sprünge in der Geschwindigkeit auftreten. Dies muss auf der Ebene der Folgeregelung ausgeglichen werden.

Für die prädiktive Planung wird das eingangs dargestellte Optimierungsproblem im Zeitschritt $t_k$ wie folgt angepasst:

$$\min_{\bar{\boldsymbol{u}}(\cdot),T} \quad J(\bar{\boldsymbol{u}}, T) = V(T) + \int_0^{\bar{T}} l(\bar{\boldsymbol{x}}(\tau), \bar{\boldsymbol{u}}(\tau)) \, \mathrm{d}\tau$$

$$\text{u.B.v.} \quad \dot{\bar{\boldsymbol{x}}}(\tau) = \boldsymbol{f}(\bar{\boldsymbol{x}}(\tau), \bar{\boldsymbol{u}}(\tau))$$

$$\bar{\boldsymbol{x}}(0) = \boldsymbol{x}_{k+1} = \boldsymbol{x}(t_k + \Delta t), \quad \bar{\boldsymbol{x}}(T) = \boldsymbol{x}_G$$

$$\bar{\boldsymbol{u}}(\tau) \in [\boldsymbol{u}^-, \boldsymbol{u}^+], \quad \tau \in [0, T]$$

$$T \in [T^-, T^+]$$

$$\boldsymbol{g}(\bar{\boldsymbol{x}}(\tau)) = \boldsymbol{0}, \quad \tau \in [0, T]$$

$$\boldsymbol{h}(\bar{\boldsymbol{x}}(\tau)) \leq \boldsymbol{0}, \quad \tau \in [0, T].$$

Hierbei werden mit $\bar{x}$ und $\bar{u}$ die internen Größen des Optimierers bezogen auf die Zeit $\tau \in [0, T]$ bezeichnet, um sie von dem realen Zustand $x(t)$ zu unterscheiden. Geändert hat sich am Optimierungsproblem insbesondere die Anfangsbedingung, da im Zeitschritt $t_k$ ausgehend vom zukünftigen Zustand $x(t_k + \Delta t)$ geplant werden muss. Außerdem kann die Endzeit T als weitere Optimierungsgröße mit Grenzen und einer Gewichtung in der Kostenfunktion berücksichtigt werden.

Damit die Zielposition $q_G$ nicht nur asymptotisch für t $\to \infty$ erreicht wird, muss zum einen eine harte Endbeschränkung $q(T) = q_G$ im Optimierungsproblem gefordert werden und zum anderen muss der Zeithorizont T sukzessive verkürzt werden bis für $T = \Delta t$ der Zielpunkt in einem Abtastschritt exakt erreicht wird. Dazu wird ausgehend von einer initialen Abschätzung der benötigten Zeitdauer, die Endzeit nach jedem Zeitschritt um $\Delta t$ verkürzt, d.h. $T^{(k+1)} = T^{(k)} - \Delta t$. Um ein zeitoptimales Verhalten und eine Adaption an veränderte Umgebungsbedingungen zu realisieren, muss die Endzeit als freie Optimierungsvariable betrachtet werden.

Insbesondere bei der Planung mit geschlossener Kinematik kann es vorkommen, dass die Abtastzeit $\Delta t$ nicht ausreicht, um im ersten Schritt eine zulässige Trajektorie zu berechnen. Vor Ausführung des ersten Schritts muss deshalb mehr Zeit in die Optimierung investiert werden. Dazu kann entweder die maximale Anzahl an Iterationen $N_{ocp}$ dieser Vorabberechnung limitiert werden oder eine Zeit $T_{validate} < T$ definiert werden. In diesem Fall beginnt die Ausführung erst, wenn der entsprechende Teil der Trajektorie zulässig ist. So kann z.B. gefordert werden, dass die Bewegung für die nächste Sekunde bereits kollisionsfrei sein muss.

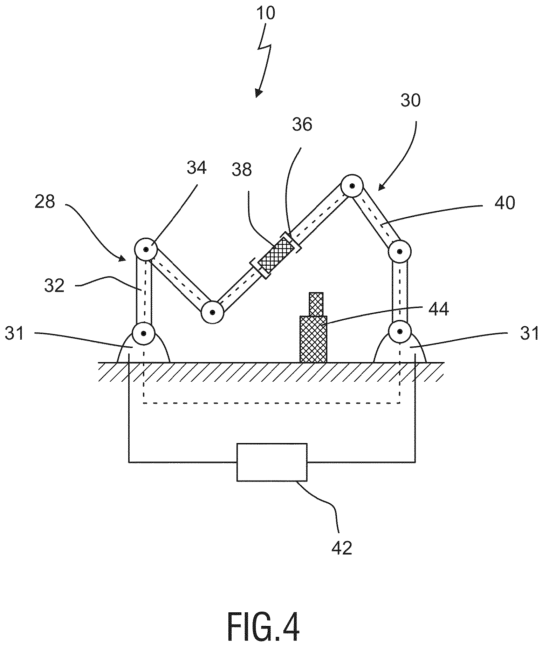

Fig. 4 zeigt ein bevorzugtes Ausführungsbeispiel einer neuen Vorrichtung. Die neue Vorrichtung ist hier in ihrer Gesamtheit mit der Bezugsziffer 10 bezeichnet und in diesem Ausführungsbeispiel als ein Zweiarmroboter mit einem ersten Manipulator 28 und einem zweiten Manipulator 30 ausgebildet. Die Manipulatoren 28, 30 sind über eine gemeinsame Basis 31 miteinander verbunden und in diesem Ausführungsbeispiel symmetrisch aufgebaut. Jeder Manipulator 28, 30 hat drei Glieder 32 und drei Gelenke 34 und an den Enden jedes Manipulators 28, 30 ist ein Endeffektor 36, der hier als Greifer ausgebildet ist, angeordnet. Beide Manipulatoren 28, 30 können gemeinsam ein Werkstück 38 greifen und bewegen. Durch die Verbindung über das Werkstück 38 entsteht eine geschlossene kinematische Kette 40, die hier durch die gestrichelte Linie angedeutet ist.

Bei der Bewegung der beiden Manipulatoren 28, 30 und somit auch bei deren Bewegungsplanung muss diese geschlossene Kinematik berücksichtigt werden, da ansonsten die Manipulatoren 28, 30 das Werkstück 38 fallen lassen würden.

Die Bewegung des ersten und des zweiten Manipulators 28, 30 wird über eine Steuereinheit 42 koordiniert. Die Steuereinheit 42 führt hierzu das zuvor beschriebene Verfahren aus, d.h. die Steuereinheit 42 ermittelt eine koordinierte Bewegungsbahn sowohl für den ersten als auch den zweiten Manipulator 28, 30 unter Berücksichtigung der geschlossenen Kinematik. Die Steuereinheit 42 ist somit dazu ausgebildet, das zugrundeliegende Optimierungsproblem numerisch zu lösen.

Besonders bevorzugt ist die Steuereinheit 42 dazu eingerichtet, die Planung und Ausführung parallel durchzuführen. D.h. die Manipulatoren 28, 30 werden bereits bewegt noch bevor eine optimale und vollständige Bewegungsplanung erfolgt ist.

Neben der geschlossenen Kinematik berücksichtigt die Steuerung 42 dabei auch noch Hindernisse 44, die im Bewegungsraum der Manipulatoren 28, 30 angeordnet sind. Besonders bevorzugt werden nicht nur statische Hindernisse 44, sondern auch sich bewegende Hindernisse im Bewegungsraum berücksichtigt.

Durch den Ansatz der parallelen Planung und Ausführung, welcher eine kontinuierliche Optimierung beinhaltet, kann besonders vorteilhaft die sich verändernde Umgebung berücksichtigt werden.

## Patentansprüche

1. Verfahren (100) zur kollisionsfreien Bewegungsplanung eines ersten Manipulators (28) bei geschlossener Kinematik, mit den Schritten:

   - Definieren eines dynamischen Optimierungsproblems (12),
   - Lösen des Optimierungsproblems (12) über einen numerischen Ansatz,
   - Bestimmen einer ersten Bewegungsbahn für den ersten Manipulator (28) anhand der Lösung des Optimierungsproblems (12), und
   - Ausführen der ersten Bewegungsbahn,

   wobei das dynamische Optimierungsproblem ein Kostenfunktional (20), welches Zustände (16) und Stellgrößen (18) des ersten Manipulators (28) gewichtet, eine Dynamik (14), welche Zustände (16) und Stellgrößen (18) des ersten Manipulators (28) in Abhängigkeit der Zeit definiert, mindestens eine Ungleichungsbeschränkung (24) für einen Abstand zu Kollisionen sowie mindestens eine Gleichungsbeschränkung (22) für die geschlossene Kinematik umfasst,
   **dadurch gekennzeichnet, dass**
   die Lösung des Optimierungsproblems (12) sukzessive und parallel zur Ausführung der ersten Bewegungsbahn erfolgt, indem das dynamische Optimierungsproblem (12) eine Endzeit (T) aufweist, welche die Zeitdauer der Bewegung repräsentiert, und der numerische Ansatz in einem ersten Zeitschritt eine Trajektorie von einem Startpunkt ($q_s$) zu einem Zielpunkt ($q_G$) plant, in einem zweiten Zeitschritt einen Anfang dieser Trajektorie zu einem Zwischenpunkt ($q_1$) ausführt und zeitgleich die Bewegung von dem Zwischenpunkt ($q_1$) zu dem Zielpunkt ($q_s$) weiter anhand eines angepassten Optimierungsproblems, welches dem dynamischen Optimierungsproblem (12) entspricht und einen Zustand an einem Ende des ersten Zeitschritts als Anfangsbedingung berücksichtigt, optimiert,
   wobei dieses schrittweise Vorgehen so lange wiederholt wird, bis innerhalb eines Zeitschritts der Zielpunkt ($q_G$) erreicht wird, indem das Optimierungsproblem ferner eine Endbeschränkung für die Endzeit (T) aufweist und der numerische Ansatz ausgehend von einer initialen Abschätzung für die Endzeit (T) nach jedem Zeitschritt die Endzeit (T) verkürzt, bis mit einem letzten Zeitschritt der Zielpunkt ($q_G$) exakt erreicht wird.

**2.** Verfahren nach Anspruch 1, wobei das dynamische Optimierungsproblem (12) zusätzlich Randbedingungen (26) umfasst, welche eine Anfangs- und eine Endbedingung definieren.

**3.** Verfahren nach einem der Ansprüche 1 oder 2, wobei das dynamische Optimierungsproblem (12) ferner eine oder mehrere Stellgrößenbeschränkungen umfasst, welche minimale und maximale Stellgrößen definieren.

**4.** Verfahren nach Anspruch 3, wobei die minimalen und maximalen Stellgrößen minimale und maximale Geschwindigkeiten und/oder Beschleunigungen des ersten Manipulators (28) sind.

**5.** Verfahren nach einem der Ansprüche 1 bis 4, wobei das dynamische Optimierungsproblem (12) ferner eine oder mehrere Zustandsbeschränkungen umfasst, welche Grenzen der Zustände definieren.

**6.** Verfahren nach Anspruch 5, wobei die Grenzen der Zustände minimale und maximale Gelenkwinkel und/oder Gelenkwinkelgeschwindigkeiten des ersten Manipulators (28) sind.

**7.** Verfahren nach einem der Ansprüche 1 bis 6, wobei die mindestens eine Ungleichungsbeschränkung (24) für einen Abstand zu Kollisionen einen Mindestabstand zu Kollisionen definiert.

**8.** Verfahren nach einem der Ansprüche 1 bis 7, wobei die mindestens eine Gleichungsbeschränkung (22) für die geschlossene Kinematik eine erste dynamische Positionsbeschränkung des ersten Manipulators (28) definiert.

**9.** Verfahren nach einem der Ansprüche 1 bis 8, wobei die mindestens eine Gleichungsbeschränkung (22) für die geschlossene Kinematik eine erste dynamische Orientierungsbeschränkung des ersten Manipulators (28) definiert.

**10.** Verfahren nach einem der vorherigen Ansprüche, wobei die mindestens eine Gleichungsbeschränkung (22) für die geschlossene Kinematik und die mindestens eine Ungleichungsbeschränkung (24) für einen Abstand zu Kollisionen jeweils mit einem Multiplikator multipliziert und zum Kostenfunktional (20) hinzuaddiert werden.

**11.** Verfahren nach einem der vorherigen Ansprüche, wobei die mindestens eine Gleichungsbeschränkung (22) für die geschlossene Kinematik und die mindestens eine Ungleichungsbeschränkung (24) für einen Abstand zu Kollisionen in quadrierter Form mit einem Strafparameter multipliziert und zum Kostenfunktional (20) hinzuaddiert werden.

**12.** Verfahren nach Anspruch 11, wobei der Multiplikator und der Strafparameter beim Lösen des dynamischen Optimierungsproblems (12) iterativ angepasst werden.

**13.** Verfahren nach einem der vorherigen Ansprüche, wobei der numerische Ansatz die Lösung des unbeschränkten Optimierungsproblems mit einem Gradientenverfahren und/oder die Überführung des dynamischen Optimierungsproblems von einem beschränkten Optimierungsproblem in ein unbeschränktes Optimierungsproblem beinhaltet.

**14.** Verfahren nach einem der vorherigen Ansprüche, wobei das Verfahren ferner umfasst:

- Bestimmen einer zweiten Bewegungsbahn für einen zweiten Manipulator (30),

wobei das Kostenfunktional (20) zusätzlich die Zustände (16) und Stellgrößen (18) des zweiten Manipulators (30) gewichtet und die Dynamik (14) die Zustände (16) und Stellegrößen (18) des zweiten Manipulators (30) in Abhängigkeit der Zeit definiert, und wobei der erste Manipulator (28) und der zweite Manipulator (30) die geschlossene Kinematik bilden, insbesondere wobei die mindestens eine Gleichungsbeschränkung (22) für die geschlossene Kinematik eine erste dynamische Positions- und/oder Orientierungsbeschränkung des ersten Manipulators (28) und eine zweite dynamische Positions- und/oder Orientierungsbeschränkung des zweiten Manipulators (30) umfasst, die in einem definierten, festen Verhältnis zueinander stehen, so dass die geschlossene Kinematik erfüllt ist.

**15.** Vorrichtung mit einem ersten Manipulator (28) und einer Steuereinheit (42), wobei die Steuereinheit (42) dazu ausgebildet ist, ein Verfahren gemäß einem der Ansprüche 1 bis 14 auszuführen.

**Claims**

**1.** A method (100) for collision-free motion planning of a first manipulator (28) with closed kinematics, comprising:

- Defining a dynamic optimization problem (12),
- Solving the optimization problem (12) via a numerical approach, and
- Determining a first movement path for the first manipulator (28) based on the solution of the optimization problem (12),
- Executing the first movement path,

wherein the dynamic optimization problem comprises a cost function (20) which weights states (16) and control variables (18) of the first manipulator (28), a dynamic (14) which defines states (16) and control variables (18) of the first manipulator (28) as a function of time, at least one inequality constraint (24) for a distance to collisions, and at least one equality constraint (22) for closed kinematics,
**characterized in that**
solving the optimization problem (12) is carried out successively and in parallel to the execution of the first movement path by including an end time (T) representing the duration of the movement in the dynamic optimization problem (12), and the numerical approach determines in a first time step a trajectory from a start point ($q_s$) to a target point ($q_G$), executes in a second time step a beginning of this trajectory up to an intermediate point ($q_1$), and optimizes at the same time the movement from the intermediate point ($q_1$) to the target point ($q_G$) based on an adjusted optimization problem that corresponds to the dynamic optimization problem and which considers a state at an end of the first time step as initial condition, wherein this stepwise procedure is repeated until the target point ($q_G$) is reached within a time step by including a final constraint for the end time (T) in the optimization problem (12), and wherein the numerical approach shortens, starting from an initial estimate for the end time (T), the end time (T) after each time step until the target point ($q_G$) is reached exactly within a last time step.

2. The method according to claim 1, wherein the dynamic optimization problem (12) additionally comprises boundary conditions (26) which define a start condition and an end condition.

3. The method according to claim 1 or 2, wherein the dynamic optimization problem (12) further comprises one or more control variable constraints defining minimum and maximum values of the control variables.

4. The method according to claim 3, wherein the minimum and maximum values of the control variables include values for minimum and maximum speeds and/or accelerations of the first manipulator (28).

5. The method according to any one of claims 1 to 4, wherein the dynamic optimization problem (12) further comprises one or more state constraints defining limits of the states.

6. The method according to claim 5, wherein the limits of the states include minimum and maximum joint angles and/or joint angular velocities of the first manipulator (28).

7. The method according to any one of claims 1 to 6, wherein the at least one inequality constraint (24) for a distance to collisions defines a minimum distance to collisions.

8. The method according to any one of claims 1 to 7, wherein the at least one equality constraint (22) for the closed kinematics defines a first dynamic position constraint of the first manipulator (28).

9. The method according to any one of claims 1 to 8, wherein the at least one equality constraint (22) for the closed kinematics defines a first dynamic orientation constraint of the first manipulator (28).

10. The method according to any one of the preceding claims, wherein the at least one equality constraint (22) for the closed kinematics and the at least one inequality constraint (24) for a distance to collisions are each multiplied by a multiplier and added to the cost function (20).

11. The method according to any one of the preceding claims, wherein the at least one equality constraint (22) for closed kinematics and the at least one inequality constraint (24) for a distance to collisions are multiplied in squared form by a penalty parameter and added to the cost function (20).

12. The method according to claim 11, wherein the multiplier and the penalty parameter are iteratively adapted when solving the dynamic optimization problem (12).

13. The method according to any one of the preceding claims, wherein the numerical approach comprises the solution of the unconstrained optimization problem with a gradient approach and/or the numerical approach comprises the transformation of the dynamic optimization problem from a constrained optimization problem into an unconstrained optimization problem.

14. The method according to any one of the preceding claims, further comprising:

- Determining a second movement path for a second manipulator (30),

wherein the cost function (20) additionally weights the states (16) and control variables (18) of the second manipulator (30) and the dynamics (14) defines the states (16) and control variables (18) of the second manipulator (30) as a function of time, and wherein the first manipulator (28) and the second manipulator (30) form the closed kinematics, in particular, wherein the at least one equality constraint (22) for the closed kinematics comprises a first dynamic position constraint and/or orientation constraint of the first manipulator (28) and a second dynamic position constraint and/or orientation constraint of the second manipulator (30), which are in a defined, fixed relationship to one another, so that the closed kinematics is fulfilled.

15. An apparatus comprising a first manipulator (28) and a control unit (42), wherein the control unit (42) is configured to perform the method according to any one of claims 1 to 14.

**Revendications**

1. Procédé (100) pour la planification de mouvement sans collision d'un premier élément manipulateur (28) en cas de chaîne cinématique fermée, comportant les étapes consistant à :

   - définir un problème d'optimisation (12) dynamique,
   - résoudre le problème d'optimisation (12) par l'intermédiaire d'une approche numérique,
   - déterminer une première trajectoire de mouvement pour le premier élément manipulateur (28) à l'aide de la résolution du problème d'optimisation (12), et
   - exécuter la première trajectoire de mouvement,

   dans lequel le problème d'optimisation dynamique comprend une fonction de coût (20) qui pondère des états (16) et des variables de réglage (18) du premier élément manipulateur (28), une dynamique (14) qui définit des états (16) et des variables de réglage (18) du premier élément manipulateur (28) en fonction du temps, au moins une contrainte d'inégalité (24) pour une distance par rapport à des collisions ainsi qu'au moins une contrainte d'égalité (22) pour la chaîne cinématique fermée,
   **caractérisé en ce que**
   la résolution du problème d'optimisation (12) s'effectue successivement et parallèlement à l'exécution de la première trajectoire de mouvement par le fait que le problème d'optimisation (12) dynamique présente un temps final (T) qui représente la durée du mouvement, et que l'approche numérique planifie, dans un premier intervalle de temps, une trajectoire d'un point de départ ($q_s$) à un point d'arrivée ($q_G$), dans un second intervalle de temps, elle exécute un début de cette trajectoire vers un point intermédiaire ($q_1$) et, simultanément, elle optimise le mouvement du point intermédiaire ($q_1$) vers le point d'arrivée ($q_s$) en outre à l'aide d'un problème d'optimisation adapté qui correspond au problème d'optimisation (12) dynamique et qui prend en compte un état à une fin du premier intervalle de temps comme condition initiale, dans lequel cette procédure intervalle par intervalle est répétée jusqu'à ce que, au cours d'un intervalle de temps, le point d'arrivée ($q_G$) soit atteint, par le fait que le problème d'optimisation présente en outre une contrainte finale pour le temps final (T) et que l'approche numérique, en partant d'une estimation initiale pour le temps final (T), raccourcit le temps final (T) après chaque intervalle de temps jusqu'à ce que le point d'arrivée ($q_G$) soit atteint exactement avec un dernier intervalle de temps.

2. Procédé selon la revendication 1, dans lequel le problème d'optimisation (12) dynamique comprend en outre des conditions limites (26) qui définissent une condition initiale et une condition finale.

3. Procédé selon l'une des revendications 1 ou 2, dans lequel le problème d'optimisation (12) dynamique comprend en outre une ou plusieurs contraintes de variables de réglage qui définissent des variables de réglage minimales et maximales.

**4.** Procédé selon la revendication 3, dans lequel les variables de réglage minimales et maximales sont des vitesses et/ou des accélérations minimales et maximales du premier élément manipulateur (28).

**5.** Procédé selon l'une des revendications 1 à 4, dans lequel le problème d'optimisation (12) dynamique comprend en outre une ou plusieurs contraintes d'états qui définissent des limites des états.

**6.** Procédé selon la revendication 5, dans lequel les limites des états sont des angles d'articulation et/ou des vitesses d'angles d'articulation minimaux et maximaux du premier élément manipulateur (28).

**7.** Procédé selon l'une des revendications 1 à 6, dans lequel l'au moins une contrainte d'inégalité (24) pour une distance par rapport à des collisions définit une distance minimale par rapport à des collisions.

**8.** Procédé selon l'une des revendications 1 à 7, dans lequel l'au moins une contrainte d'égalité (22) pour la chaîne cinématique fermée définit une première contrainte de position dynamique du premier élément manipulateur (28).

**9.** Procédé selon l'une des revendications 1 à 8, dans lequel l'au moins une contrainte d'égalité (22) pour la chaîne cinématique fermée définit une première contrainte d'orientation dynamique du premier élément manipulateur (28).

**10.** Procédé selon l'une des revendications précédentes, dans lequel l'au moins une contrainte d'égalité (22) pour la chaîne cinématique fermée et l'au moins une contrainte d'inégalité (24) pour une distance par rapport à des collisions sont respectivement multipliées par un multiplicateur et ajoutées à la fonction de coût (20).

**11.** Procédé selon l'une des revendications précédentes, dans lequel l'au moins une contrainte d'égalité (22) pour la chaîne cinématique fermée et l'au moins une contrainte d'inégalité (24) pour une distance par rapport à des collisions sont multipliées sous forme de carré par un paramètre de pénalisation et ajoutées à la fonction de coût (20).

**12.** Procédé selon la revendication 11, dans lequel le multiplicateur et le paramètre de pénalisation sont adaptés de manière itérative lors de la résolution du problème d'optimisation (12) dynamique.

**13.** Procédé selon l'une des revendications précédentes, dans lequel l'approche numérique comprend la résolution du problème d'optimisation non contraint par une méthode de gradient et/ou la conversion du problème d'optimisation dynamique d'un problème d'optimisation contraint en un problème d'optimisation non contraint.

**14.** Procédé selon l'une des revendications précédentes, dans lequel le procédé comprend en outre :

- la détermination d'une seconde trajectoire de mouvement pour un second élément manipulateur (30),

dans lequel la fonction de coût (20) pondère en outre les états (16) et les variables de réglage (18) du second élément manipulateur (30) et la dynamique (14) définit les états (16) et les variables de réglage (18) du second élément manipulateur (30) en fonction du temps, et dans lequel le premier élément manipulateur (28) et le second élément manipulateur (30) forment la chaîne cinématique fermée, en particulier dans lequel l'au moins une contrainte d'égalité (22) pour la chaîne cinématique fermée comprend une première contrainte de position et/ou d'orientation dynamique du premier élément manipulateur (28) et une seconde contrainte de position et/ou d'orientation dynamique du second élément manipulateur (30) qui sont dans une relation fixe définie l'une par rapport à l'autre, de sorte que la chaîne cinématique fermée est satisfaite.

**15.** Dispositif comportant un premier élément manipulateur (28) et une unité de commande (42), dans lequel l'unité de commande (42) est configurée pour exécuter un procédé conformément à l'une des revendications 1 à 14.

100

102

104

106

FIG.1

12

$$\min_{\boldsymbol{u}(\cdot)} \quad J(\boldsymbol{u}) = \int\limits_{0}^{T} l(\boldsymbol{x}(t), \boldsymbol{u}(t)) \, \mathrm{d}t$$

20

16

$$\dot{\boldsymbol{x}}(t) = \boldsymbol{f}(\boldsymbol{x}(t), \boldsymbol{u}(t))$$

14

18

$$\boldsymbol{g}(\boldsymbol{x}(t)) = \boldsymbol{0}$$

22

$$\boldsymbol{h}(\boldsymbol{x}(t)) \leq \boldsymbol{0}$$

24

$$\boldsymbol{x}(0) = \boldsymbol{x}_S \,, \quad \boldsymbol{x}(T) = \boldsymbol{x}_G$$

26

FIG.2

FIG.3

FIG.4

# EP 3 723 945 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SZYNKIEWICZ et al.** Optimization-based approach to path planning for closed chain robot systems. *INTERNATIONAL JOURNAL OF APPLIED MATHEMATICS AND COMPUTER SCIENCE*, 01 December 2011, vol. 21 (4), 659-670

- **CHETTIBI T et al.** Generating optimal dynamic motions for closed-chain robotic systems. *EUROPEAN JOURNAL OF MECHANICS. A, SOLIDS, GAUTHIER-VILLARS*, vol. 24 (3), 504-518